# EUROPEAN PATENT SPECIFICATION

(11) **EP 0 677 374 B1**
(45) Date of publication and mention of the grant of the patent: **24.11.1999**
(21) Application number: 95105065.7
(22) Date of filing: 05.04.1995
(51) Int. Cl.: B29D 23/20, B67B 3/20, B65D 35/08, B29C 49/02

(54) **Flexible tube and method of and apparatus for making it**
Quetschbare Tube und Verfahren und Vorrichtung zur Herstellung
Tube souple et procédé et dispositif de fabrication

(30) Priority: 15.04.1994 US 228048; 15.04.1994 US 228055; 15.12.1994 US 356936
(43) Date of publication of application: 18.10.1995
(73) Proprietor: Owens-Brockway Plastic Products Inc., Toledo, OH 43666 (US)
(72) Inventor: Smith, Roger P., Exeter, NH 03833 (US); Krall, Thomas J., Toledo, OH 43614 (US); Kaminski, Ronald S., Bowling Green, OH 43402 (US)
(74) Representative: Blumbach, Kramer & Partner GbR

(56) References cited:
- EP-A- 0 334 468
- FR-A- 2 167 559
- FR-A- 2 680 721
- GB-A- 2 023 088
- GB-A- 2 237 000
- US-A- 2 562 523
- US-A- 4 098 932
- US-A- 5 398 485
- DATABASE WPI Section Ch, Week 9435, Derwent Publications Ltd., London, GB; Class A92, AN 94-283114 & JP-A-6 211 256 ( DAINIPPON PRINTING CO LTD) 2 August 1994
- DATABASE WPI Section Ch, Week 9126, Derwent Publications Ltd., London, GB; Class A92, AN 91-188893 & JP-A-3 115 341 ( TOPPAN PRINTING KK) 16 May 1991

## Description

The invention relates to a method and an apparatus of forming an intermediate flexible plastic article to be filled with a viscous product according to the preamble of claims 1 and 45 and to an intermediate plastic container for use in making said intermediate article which is to be filled with a viscous product according to the preamble of claim 39.

In a known method referred-to above (FR-A-2,680,721) an intermediate flexible plastic container is formed, put under pressure and printed by silk screen printing. Thereafter, the bottom of the container is cut away and the so formed intermediate article filled with viscous product and the open end sealed. However, the final container has a special shape with a variable cross section, which means that also the intermediate container with the bottom not yet cut away has a special shape which is not adapted to be engaged by a rotating device.

Production of a container by extruding a tube integrally with the neck portion and blowing the tube into an integral container having a closed bottom is known from US-A-2,911,673. During extrusion, the neck portion is moved axially away from the extruder. The bottom of the container is not specific for being engaged by a rotating device for being decorated during rotation.

Decorating bottles during rotation is known from GB-A-2,008,033. The bottles have detents for being engaged by a detent pin, and rotated. Blow-molding a multilayered parison to form an intermediate flexible plastic container, which can be filled when the bottom is cut away is known from GB-A-2 023 088. However, no means for being engaged are provided at the bottom of the intermediate container.

One of the objects of the invention is to form an flexible plastic container having exceptional decoration or indicia which can be applied by conventional silk screening equipment also by rotating the container.

The invention is defined in claims 1, 39 and 45.

According to invention, an intermediate container having an integral neck portion, a shoulder portion, a tubular body portion and a closed bottom is formed, the neck and bottom portions are engaged by a rotating device, and the intermediate container is rotated about its longitudinal axis when being decorated. Then the closed bottom is cut away and an intermediate flexible plastic article is prepared to be filled with the viscous product. Thereupon the open end of the intermediate article is closed to produce the final container which is a flexible plastic tube for use in dispensing the viscous product.

The method of forming the intermediate flexible plastic article comprises injection molding the neck portion having an opening, extruding a tube integrally with the neck portion by relative movement of the neck portion with respect to an extruder orifice, moving the neck portion axially away from the extruder orifice while continuing continuously extruding the tube, closing a blow mold about the extruded tube, blowing the tube into an integral container having a body portion and a closed bottom, and opening the mold halves to provide the intermediate container. Thereafter the method consists of decorating the container body with indicia, and cutting the bottom of the container leaving the open-ended intermediate article, and applying a closure to the neck portion thereof. The closure is applied either before or after cutting the bottom from the intermediate container. Preferably the closure is applied to the neck portion after decorating. Subsequently, the intermediate article is filled through the open end and the open end is sealed.

The step of decorating includes rotating the intermediate container about the longitudinal axis thereof while engaging the neck portion and bottom. The step of decorating preferably comprises rotating the intermediate container relative to a silk screen printing device. The step of injection molding and extrusion molding preferably comprises injecting and extruding linear low density polyethylene. However, high density polyethylene and low density polyethylene also may be used.

### Description of the Drawings

Fig. 1 is a diagram of the steps in making the flexible plastic tube embodying the invention.
Fig. 2 is a diagram of an apparatus for silk screen decorating of the container.
Fig. 3 is an elevational view of the container which is used to make the tube.
Fig. 4 is a top plan view.
Fig. 5 is a bottom plan view.
Fig. 6 is a fragmentary view of a portion of the lower end of the container.
Fig. 7 is a fragmentary part sectional view of a preferred method and apparatus for applying the closure.
Fig. 8 is a fragmentary part sectional elevational view of an apparatus for severing the bottom from the container after it is decorated.
Fig. 9 is a plan view of an apparatus embodying the station.
Fig. 10 is a plan view of the capping apparatus at the capping station shown in Fig. 9.
Fig. 11 is a fragmentary elevational view of the apparatus shown in Fig. 10.
Fig. 12 is a part sectional elevational view of a portion of the apparatus shown in Fig. 11.
Fig. 13 is a fragmentary sectional view taken along the line 13-13 in Fig. 12.
Fig. 14 is a fragmentary elevational view on an enlarged scale of another portion of the apparatus shown in Fig. 11.
Fig. 15 is a fragmentary plan view of a trimming apparatus at a trimming station.
Fig. 16 is fragmentary part sectional elevational view of the apparatus shown in Fig. 15.
Fig. 17 is a fragmentary part sectional plan view on an enlarged scale of a portion of the apparatus shown in Fig. 15.
Fig. 18 is a fragmentary part sectional view taken along the line 18-18 in Fig. 17.
Fig. 19 is a fragmentary view taken along the line 19-19 in Fig. 16.
Fig. 20 is a sectional view taken along the line 20-20 in Fig. 18.
Fig. 21 is a part sectional view taken along the line 21-21 in Fig. 17.

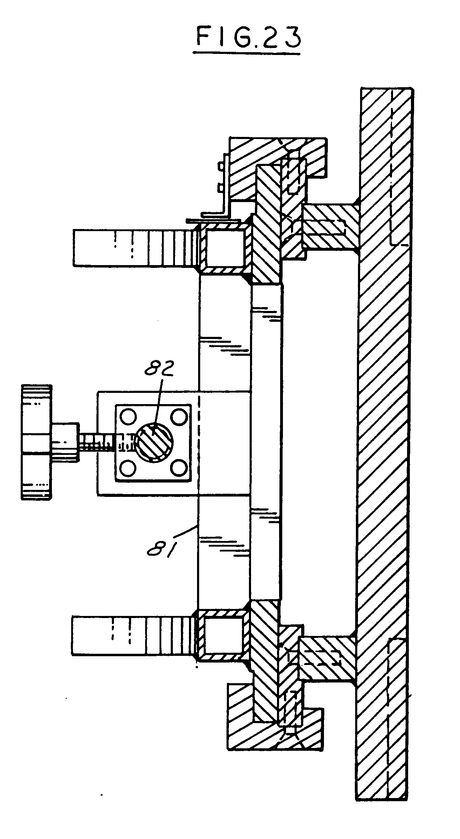

Fig. 22 is a sectional view taken along the line 22-22 in Fig. 16.
Fig. 23 is a part sectional view of the closure feed apparatus at another station.

### Description of the Preferred Embodiment

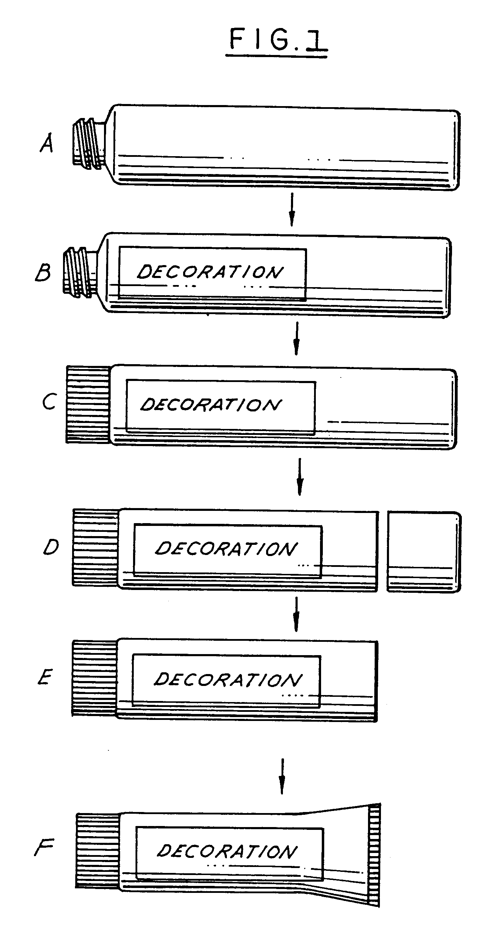

Referring to Fig. 1 which is a schematic view of the succession of steps A-F to produce a filled container, the first step A comprises making a hollow plastic container by a method and apparatus wherein the neck or finish of the container is first injection molded, then a tube is extruded integrally with the injection molded finish, molds are closed about the tube and the tube is blown to form a container. Such a method and apparatus is shown in U.S. Patents 2,710,987 and 2,911,673, incorporated herein by reference, and embodied in what has become known as a BC-3 machine.

As further shown in Fig. 1, the hollow blown container is than applied with indicia or decoration in one or more colors and designs through step B as may be desired. Step C of Fig. 1 shows applying a closure C to the container. The bottom of the container is then cut off as in step D leaving an open-ended tube as shown in step E. Step E shows the tube with the closure thereon as delivered to a customer. The purchaser of the open-ended tube fills the tube with the viscous product through the open end and then seals the open end as at F.

A closure can be applied either before or after decorating, herein shown as applied after the first decorating step B. Preferably, the closure is applied after decorating.

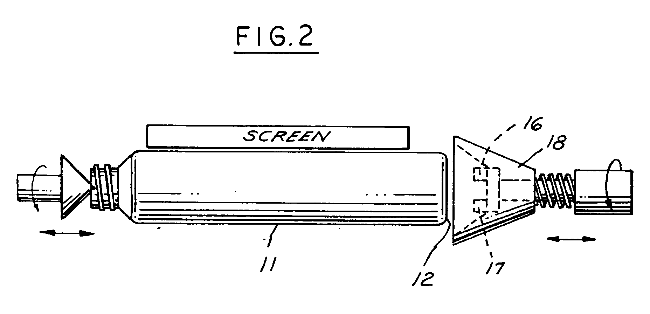

In accordance with the invention, the decorating steps are performed by rotating the container with respect to silk screen printer stations P, as shown in Fig. 2, by clamping the container and rotating the container relative to the station. Besides decorating by rotation, the step of decorating may also comprise in-mold labeling during blow molding of the tube or by heat bonding a label after the container is blown.

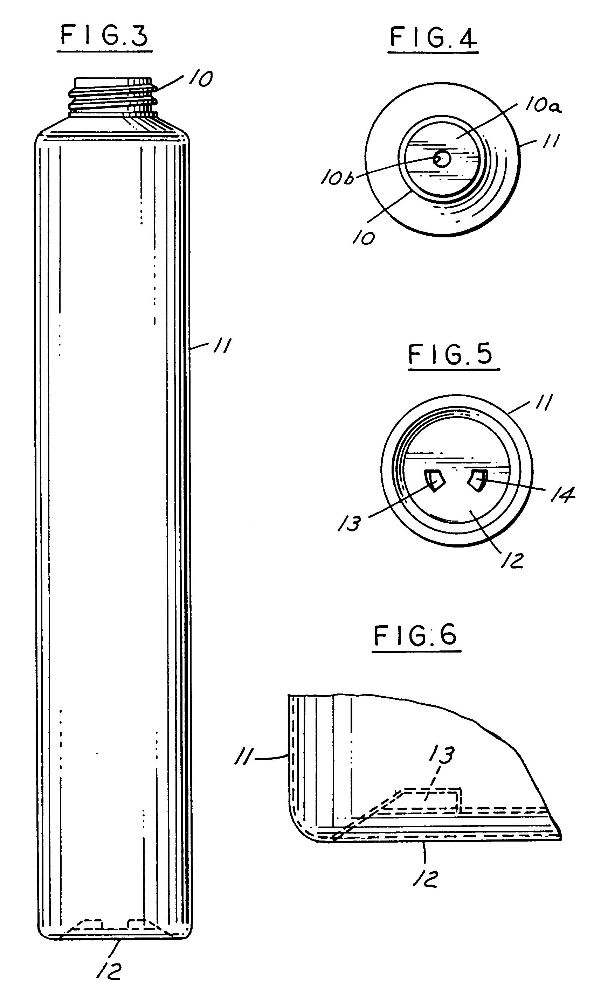

Referring to Figs. 3-6, the container comprises the injection molded finish 10, the extruded side wall or body 11 sufficiently thin thickness that it is flexible, and the integral bottom wall 12 which is thicker and relatively rigid to allow for driving the tube to rotate the tube in the capping and decorating operations. The wall 11 is preferably of substantially constant thickness, for example, ±0.15 mm (±0.006 in.).

As shown in Figs. 5 and 6, the bottom wall 12 is formed with indentations or recesses 13, 14 which are utilized so that they can be engaged by lugs 16, 17 of a chuck 18 (Fig. 2) for the printing and application of the closure. As shown in Fig. 4, the finish 10 preferably includes a top or transverse wall 10a having a centrally located dispensing opening 10b.

The container is preferably made of linear low density polyethylene. A preferred composition is linear low density polyethylene having a dispersion index of 5. However, high density polyethylene and low density polyethylene may be used.

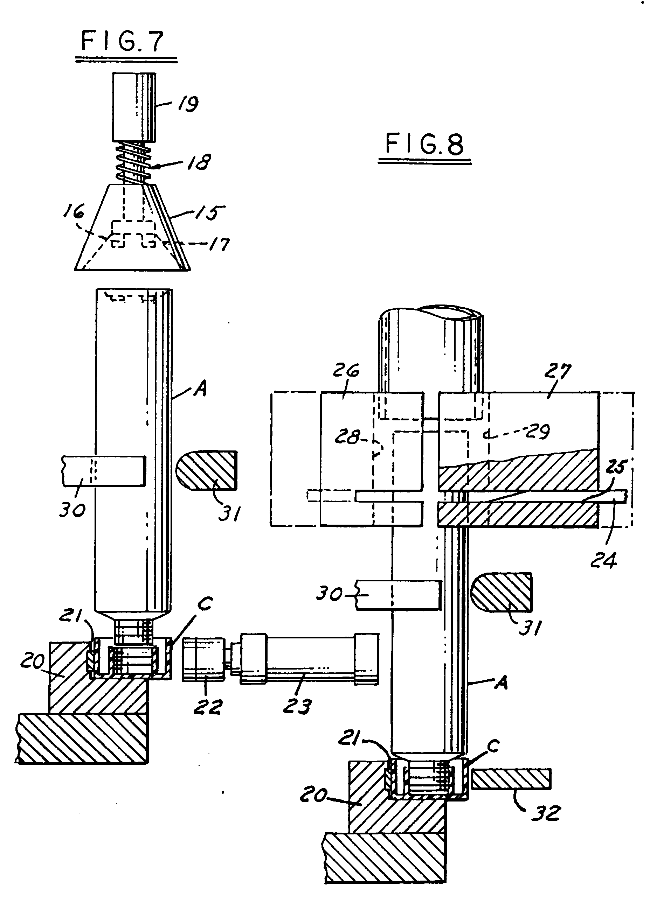

Referring to Fig. 8, the apparatus for severing the bottom of a container comprises a lower star wheel 20 having recesses 21 for receiving the closures C on the inverted containers A and an associated guide rail 32. The apparatus also includes an upper star wheel 30 with recesses for the container body 34 and an associated guide rail 31. The upper end of the container is clamped by blocks 26, 27 having recesses 28, 29 which are movable relative to one another to hold the upper end of the container A. A guillotine blade 24 is movable across the bottom of the closure by a cylinder to sever the bottom of the container A along a plane that is at 90° to the vertical or longitudinal axis of the container A. The guillotine 24 is guided by guide surfaces 25 in the blocks 26, 27.

The apparatus of Fig. 7 is preferably positioned at a capping station adjacent a rotary turret 30 which is driven intermittently past the capping station to apply the container to the closure. The apparatus shown in Fig. 8 is located at a trimming station and the turret 30 moves the inverted containers past the trimming station to sever the bottom of the container. A guide rail 32 retains the lower end of the capped container in recesses the lower star wheel during severing of the bottom of the container.

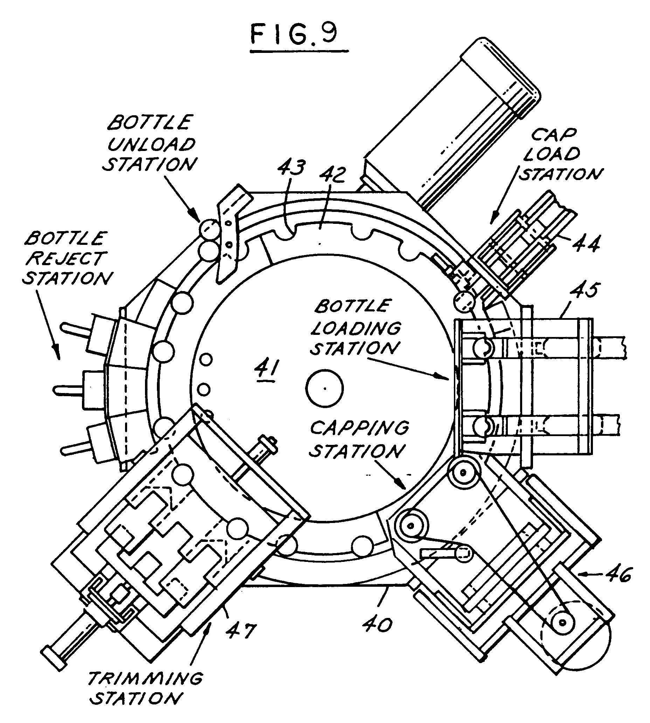

Referring to Fig. 9, a preferred form of apparatus for performing the method consists of a base 40 on which a turret 41 is rotatably mounted and driven intermittently. Turret 41 supports a star wheel 42 having a bottle or container receiving cavities 43. The apparatus as shown is intended to handle two caps and two containers at a time and includes a cap loading apparatus 44 at a cap loading station which delivers caps or closures to the base of the turret singularly; a bottle loading apparatus 45 at a bottle loading station which delivers two bottles at a time down an inclined path and in inverted position to the cavities 43 of the star wheel (Fig. 9); a capping apparatus 46 at a capping station; and a trimming apparatus 47 at a trimming station. The apparatus further includes a bottle reject station and a bottle unload station.

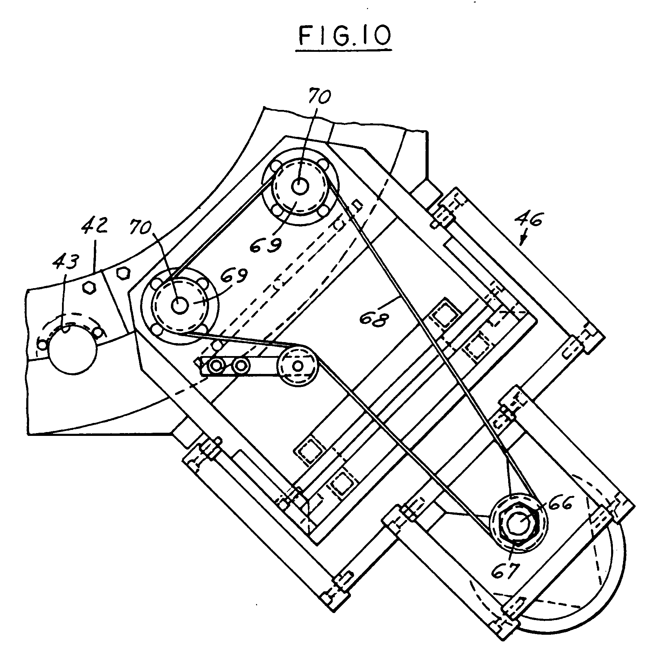

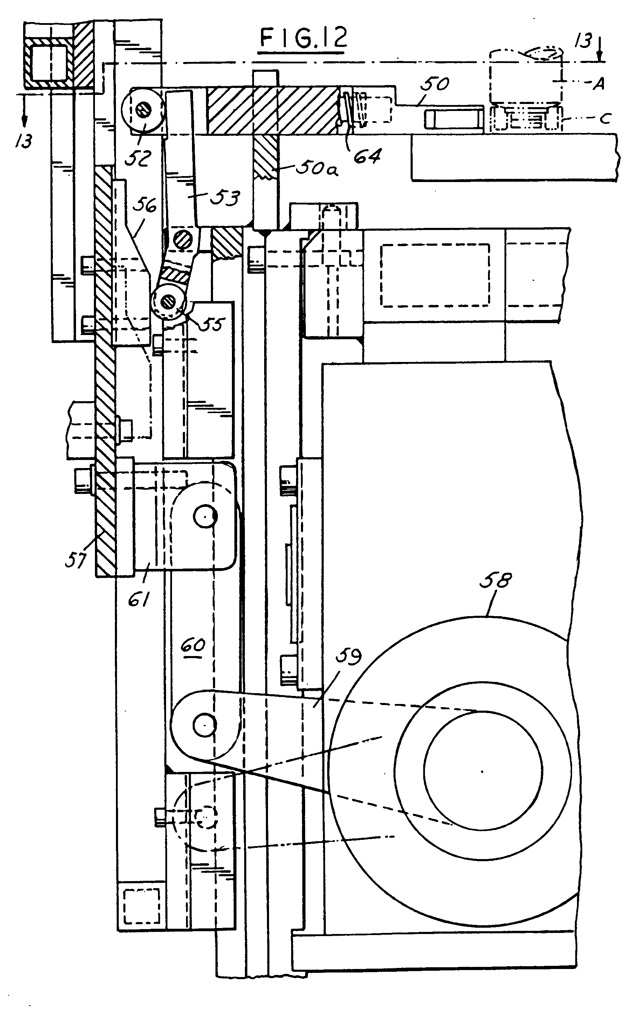

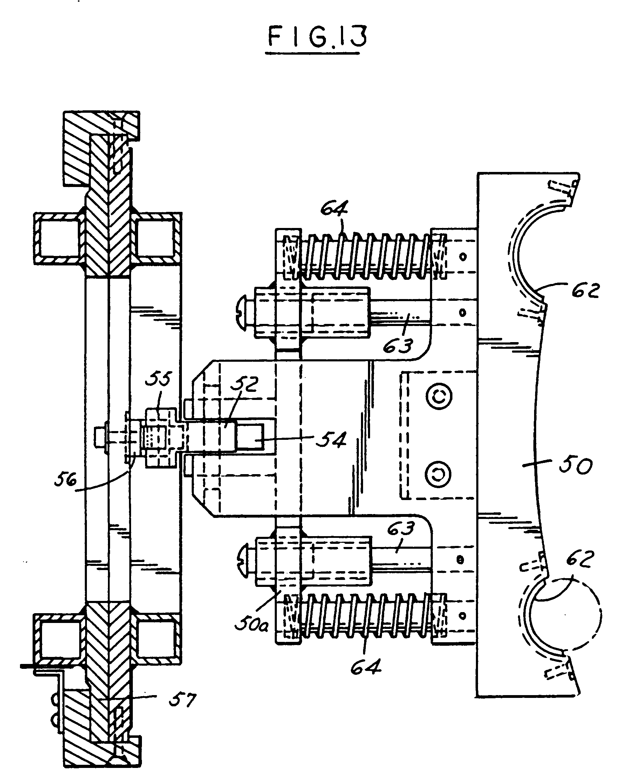

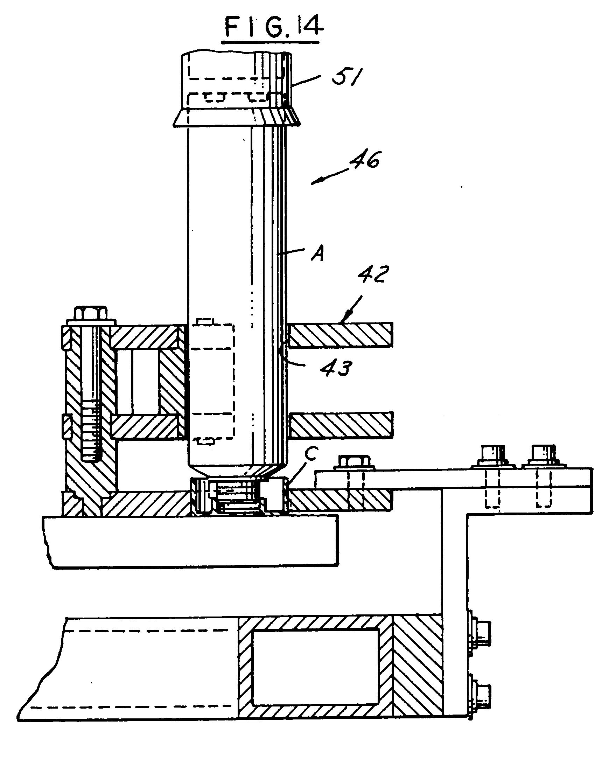

Referring to Figs. 10-14, the capping apparatus 46 includes a cap holding member 50 and is adapted to hold the two closures C stationary while the bottles A resting thereon are rotated by rotating chucks 51. The cap holding member 50 is moved radially toward and away from the closures C by engagement of a cam follower roller 52 with a lever 53 that has one end 54 engaging the roller 52 and a lower end 55 engaging a cam 56 (Figs. 12, 13). An oscillating mechanism moves the cam 56 upwardly and downwardly through a support plate 57. The upward and downward movement is controlled by an oscillating motor 58 having a crank arm 59 thereon engaging a link 60 pivoted to a bracket 61 on fixed plate 57.

Referring to Fig. 13, the cap holding member 50 includes two recesses 62 for engaging simultaneously two caps C. The cap holding member 50 has shafts 63 fixed thereto which are slidably mounted in bearings in a fixed plate 50a. Springs 64 are interposed between the cap holding member 50 and plate 50a to yieldingly urge the cap holding member 50 radially toward the closures C as the cam follower 55 follows the cam 56.

Referring to Figs. 9-11, each chuck 51 is adapted to be rotated through a torque limiter 65 interposed between the chuck 51 and a shaft 66. A pulley 67 on shaft 66 has a belt 68 trained over a pulley 69 on a spline shaft 70. The shafts 66, 70 are rotatably mounted in a support 71 and moved vertically toward and away from the bottom of the containers by a linear motor 72. As shown in Fig. 9 which is a top plan view, each chuck 51 is driven in this manner.

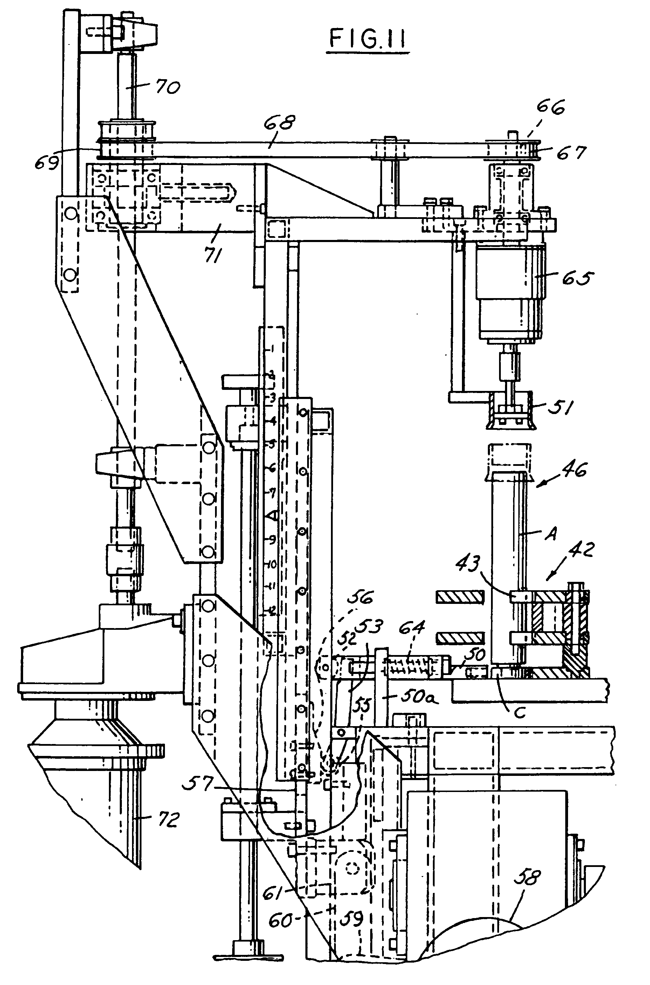

As shown in Figs. 11 and 12, the chuck 51 and associated apparatus are mounted on the support plate 57 such that it is moved along the spline shaft by the crank arm 90. In operation, the chuck is continuously rotating, the holding member is moved to hold the closures and then the chucks are lowered to engage the closures.

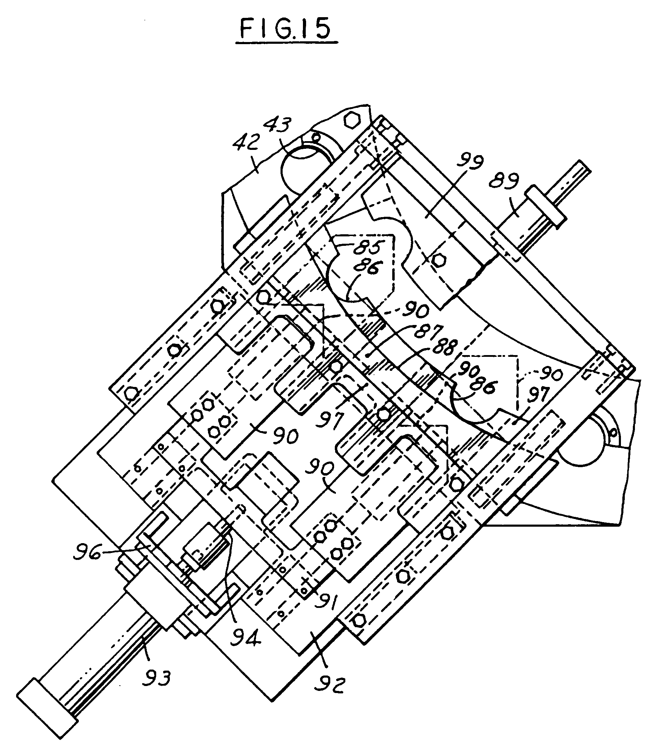

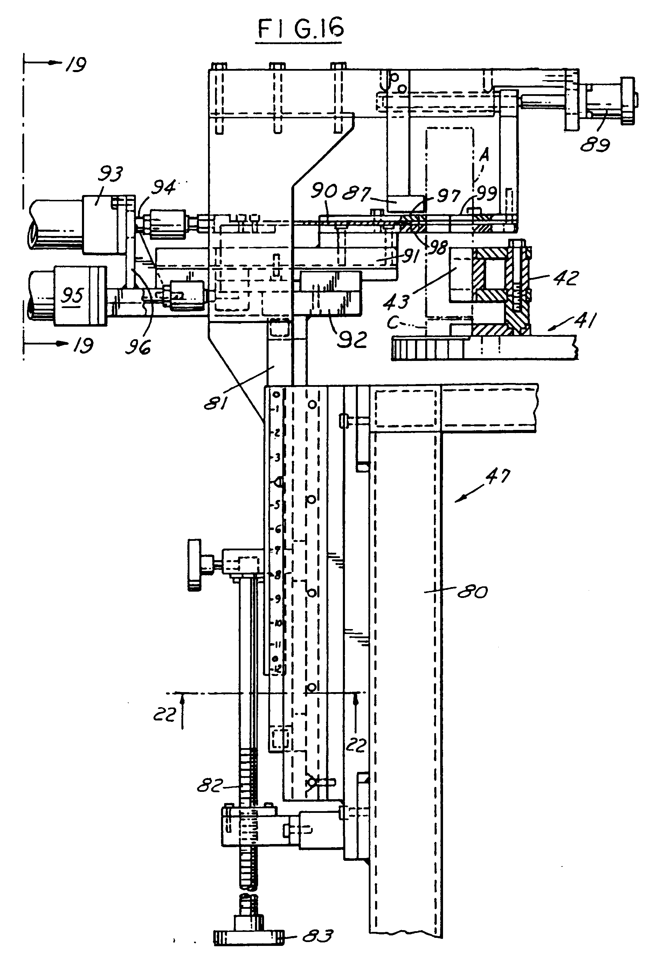

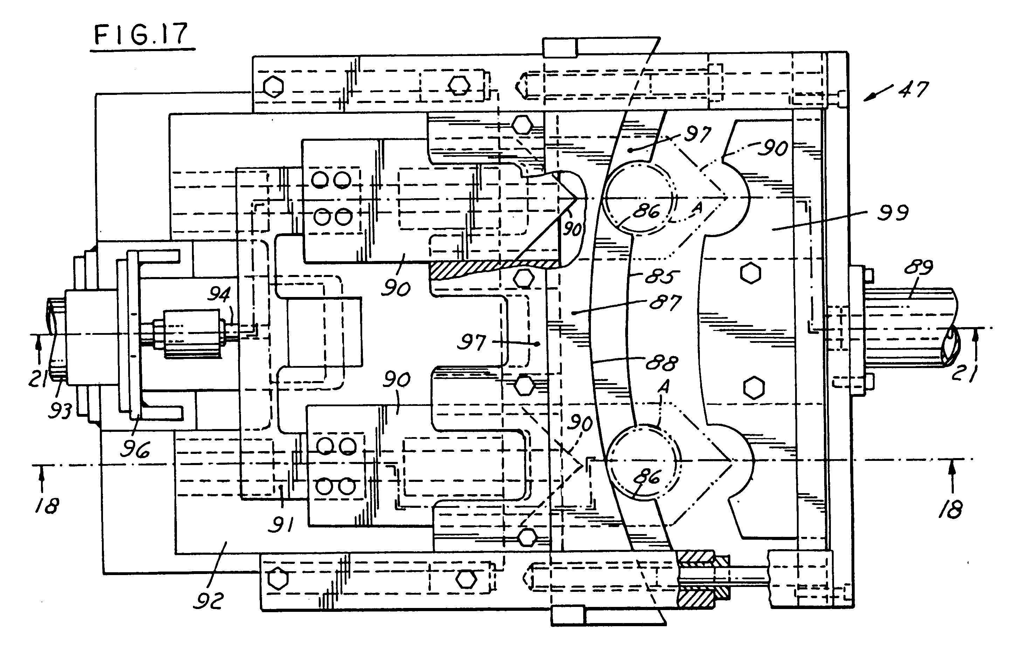

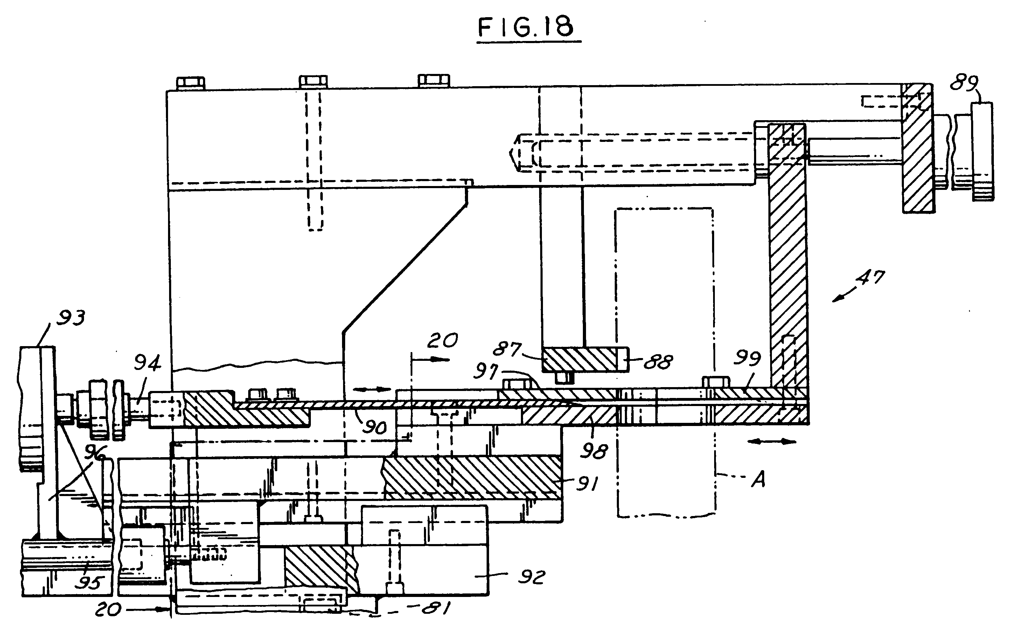

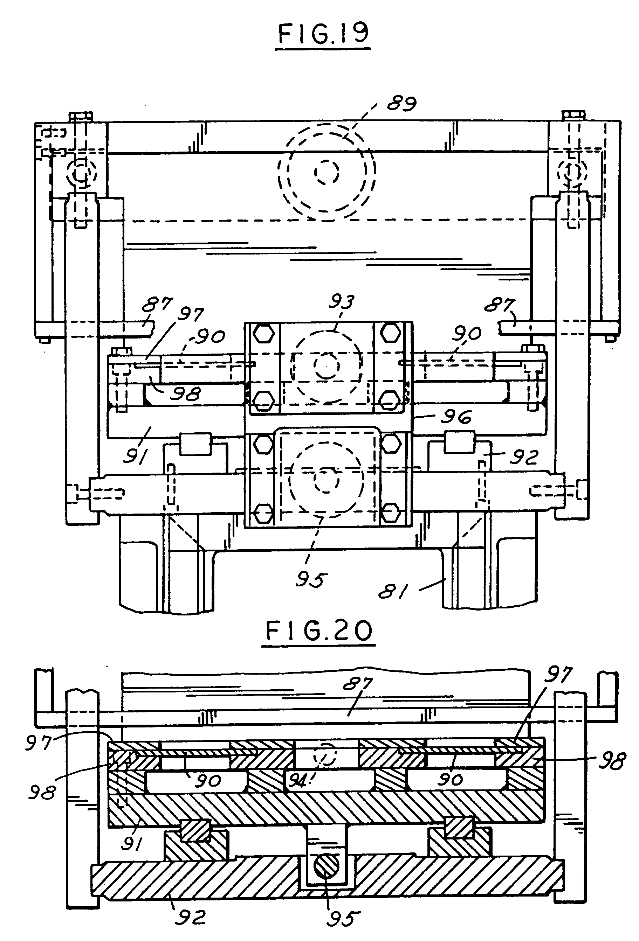

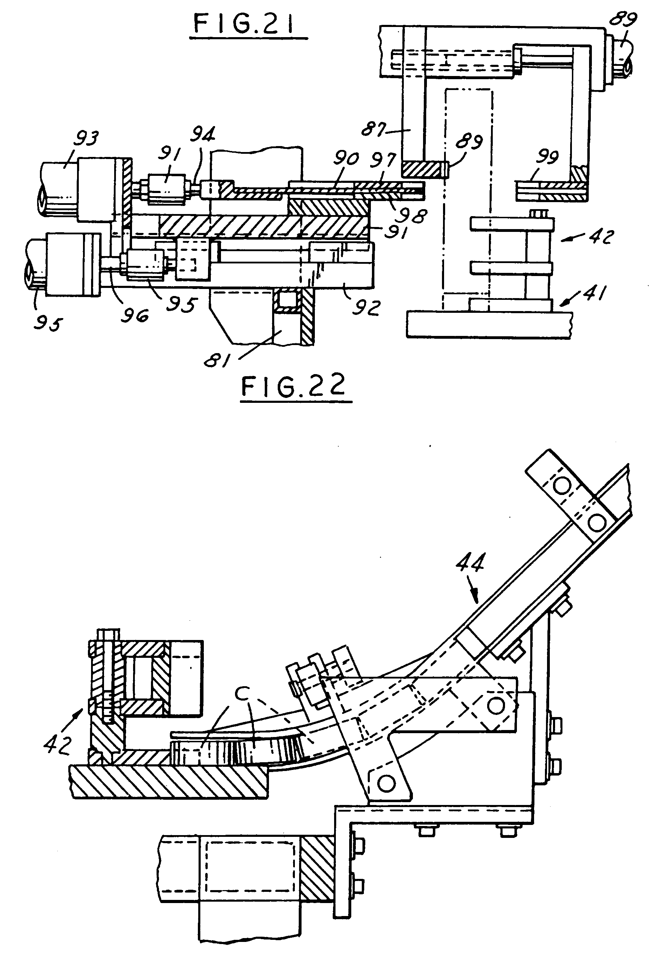

Referring to Figs. 15-21, the trimming apparatus 47 at the trimming station comprises a column 80 on base 40 which includes a slide 81 that is adjustable vertically through a threaded shaft 82 and knob 83 to raise and lower the trimming apparatus. The apparatus 47 further includes a first fixed holding member 85 having arcuate recesses 86 that receive and hold the bottles A with the caps C thereon in the recesses 43. A second holding member 87 having an arcuate edge 88 is positioned in fixed position above the knives 90 to engage the containers A above the area to be cut (Figs. 15, 16, 21).

As shown in Figs. 15-21, a pair of cutting knives 90 are mounted on a slide 91 for movement toward and away from the containers A. Each knife 90 has a V-shaped cutting edge such that the point of the knife 90 pierces the body of the container A. Slide 91 is guided for movement on a second slide 92. The slide 91 is moved by a cylinder 93 through a shaft 94. A second cylinder 95 is fixed on a bracket 96 mounted on cylinder 93 and has a shaft 97 connected to second slide 92. The first slide 91 has a projection 91a that extends into a recess 92a in the second slide 92 such that the slide supporting knives 90 have limited relative movement. The knives 90 are reciprocated in a horizontal space formed by fixed guides 97, 98 such that the knifes 90 move at a right angle relative to the vertical axis of containers A.

Third movable holding members 99 are provided above and below the knives 90 and has recesses 100 which cooperate with recesses 86 to hold the containers below the knives 90. The third holding members 99 are connected to a cylinder 89 to move toward and away from the containers A. The second holding member 87, being positioned above the knives, functions to prevent the containers from tilting toward the knives 90 during the cutting.

In operation, containers A are delivered to the intermittently driven turret at the bottle load station, then successively to the capping station, bottle inspection station, trimming station, reject station and unload station.

Although the apparatus has been described with respect to two containers, it can be readily modified to handling a single container and additional containers.

It can thus be seen that there has been provided a method of forming a flexible plastic tube comprises injection molding a finish having an opening, extruding a tube integrally with the finish by relevant movement of the finish with respect to an extruder orifice, moving the finish axially away from the extruder orifice while continuing continuously extruding the tube, closing a blow mold about the extruded tube, blowing the tube into an integral container body having a closed bottom, opening the molds to provide an integral flexible tube with a finish thereon. Thereafter the method consists of decorating the body with indicia, and cutting the closed end of the tube leaving an open-ended tube of the end opposite the finish, and applying a closure to the finish. A closure is applied either before or after cutting the bottom from the container. Preferably the closure is applied to the finish after decorating. Subsequently, the tube is filled through the open end and the open end is sealed. The step of decorating includes rotating the tube about the longitudinal axis of the tube while engaging the finish and bottom. The step of decorating preferably comprises rotating the container relative to a silk screen printing device. The step of injection molding and extrusion molding preferably comprises injecting and extruding linear low density polyethylene. However, high density polyethylene and low density polyethylene may be used.

## Claims

1. A method of forming an intermediate flexible plastic article to be filled with a viscous product which comprises:
injection molding a neck portion (10) having an opening (10b),
extruding a tube integrally with the neck portion (10),
blowing said tube into an intermediate container having a body portion (11) and a closed bottom (12),
decorating the body portion (11) with indicia,
cutting the closed bottom (12) of the intermediate container so as to leave an article having a neck portion (10), a shoulder portion and an open end, characterized in that
extruding is by relative movement of the neck portion (10) with respect to and axially away from the extruder while continuing continuously extruding said tube,
blowing includes closing a blow mold about the extruded tube and forming said body portion (11) with a substantially constant wall thickness and with a bottom (12) which is thicker than the wall thickness of said body portion (11) and which includes means for being engaged, so that, after opening the molds, said intermediate container having an integral neck portion (10), a shoulder portion, a tubular body portion (11) and a closed bottom (12) is provided, and
said step of decorating includes engaging the neck and bottom portions (10, 12) and rotating said intermediate container about its longitudinal axis while engaging the neck and bottom portions (10, 12).

2. The method set forth in claim 1
wherein said step of blowing said tube forms indentations (13, 14) in the bottom (12) of said intermediate container, said indentations (13, 14) constituting said means for being engaged to rotate said container.

3. The method set forth in claim 1 or 2
wherein said step of decorating comprises rotating said intermediate container relative to a silk screen printing device.

4. The method set forth in claim 1 or 2
wherein said step of decorating comprises applying a label to the intermediate container.

5. The method set forth in claim 1 or 2
wherein said step of decorating comprises in-mold labeling.

6. The method set forth in any of claims 1 to 5
wherein said shoulder portion is formed with walls having a thickness greater than that of said body portion (11).

7. The method set forth in any one of claims 1 to 6
wherein said step of injection molding and extrusion molding comprises injecting and extruding linear low density polyethylene.

8. The method set forth in claim 7
wherein said linear low density polyethylene having a molecular weight dispersion index greater than 5.

9. The method set forth in any of claims 2 to 8
wherein said step of engaging said indentations (13, 14) comprises moving a chuck (15) having axially engageable elements (16, 17) axially into engagement with said indentations (13, 14) and said step of rotating said container comprises rotating said chuck (15).

10. The method set forth in claim 9
including providing spring means (18) yieldingly urging said chuck (15) into engagement with said bottom (12) of said container.

11. The method set forth in any of claims 1 to 10
including applying a closure (C) to the neck portions (10) of said intermediate container prior to cutting the closed bottom (12) of the container.

12. The method set forth in claim 11
wherein said neck portion (10) has a thread and said closure (C) has a thread including holding said closure (C) and rotating said intermediate container to apply said closure (C).

13. The method set forth in claim 12
wherein said step of holding the closure (C) comprises providing a guide rail (32), providing a holding member (50) having recesses (62), providing a closure (C) adjacent said rail (32), and moving said holding member (50) toward the rail (32) to hold the closure in position.

14. The method set forth in claim 13
including the step of yieldingly supporting said holding member (50).

15. The method set forth in claim 14
including the step of supporting said holding member (50) comprises interconnecting said holding member (50) with the movement of said chuck (51) toward the container such that the holding member (50) is moved into engagement with said closure before the chuck (51) is rotated to rotate the container.

16. The method set forth in claim 15
wherein said step of interconnecting comprises supporting said chuck (51) for movement toward and away from a container and moving the chuck toward and away from a container.

17. The method set forth in claim 16
wherein said step of moving said chuck (51) and said holding member (50) comprises providing an oscillating crank (59) interconnected with said holding member (50) and said chuck (51).

18. The method set forth in claim 17
including providing a cam (56) on said support of said chuck, interconnecting said cam (56) with said crank (59) and providing a cam follower (52) on said holding member (50) movable with said holding member (50).

19. The method set forth in claim 18
including the step of pivotally mounting said cam follower (52) on said holding member (50).

20. The method set forth in any of claims 1 to 19
wherein said step of cutting the bottom of the container comprises holding the container and moving a knife (24, 90) transversely of the longitudinal axis of said container.

21. The method set forth in claim 20
wherein said step of cutting is by clamping the lower end of the intermediate container and directing a cutter blade knife (24) is directed transversely between clamped portions of the flexible tube portion.

22. The method set forth in claim 20 or 21
including the step of guiding the movement of the knife (24, 90) such that it is in a single plane.

23. The method set forth in claim 22
wherein said step of cutting said container comprises providing a flat knife (90) having a V-shaped cutting edge, holding said container with the cap (C) thereon in inverted upright position and guiding said knife blade transversely of the vertical axis of the container.

24. The method set forth in claim 23
wherein said step of holding the container in inverted upright position comprises providing opposed arcuate clamping members (85, 99) having opposed arcuate recesses (86) and moving one of said clamping members toward the other toward the container to clamp the container.

25. The method set forth in claim 24
including the step of providing a second holding member (87) spaced vertically from said first holding member (99) in a position above the path of movement of the knife (90) to prevent tilting of the container.

26. The method set forth in claim 25
wherein the step of guiding the knife (90) comprises providing a guide slot for guiding said knife.

27. The method set forth in claim 26
wherein said step of moving said knife (90) comprises mounting said knife on a slide (91) and moving said slide (91) toward and away from the container.

28. The method set forth in claim 27
wherein said step of moving said first slide (91) comprises providing a cylinder (93) and actuating said cylinder to move said slide.

29. The method set forth in claim 28
including providing a second slide (92), positioning said first slide (91) on said second slide (92), providing a projection (91a) on said first slide (91), extending into a recess (92a) in said second slide (92) to limit the movement of said slide upon actuation of said cylinder (93).

30. The method set forth in claim 29
including the step of moving the knife (90) vertically.

31. The method set forth in any of claims 20 to 30
wherein said step of holding said container comprises providing opposed gripping members (85, 99) for holding the container adjacent the closed end.

32. The method set forth in claim 31
wherein said step of guiding said knife (90) comprises providing a guide surface on at least one of said gripping members (85, 99).

33. The method set forth in claim 32
wherein said step of providing a guiding surface comprises providing a slot in at least one.of said gripping members (85, 99).

34. The method set forth in claim 33
including providing aligned slots in both of said gripping members (85, 99).

35. The method set forth in any one of claims 12 to 34
including the step of intermittently moving said closure (C) through a predetermined path and performing the step of holding and rotating the container to thread the closure on the container at one point along said path and performing the step of cutting the bottom of the container at another point along said path.

36. The method set forth in claim 35
wherein said steps of applying the closure (C) and cutting said container are performed while the closure and container are inverted.

37. The method set forth in claim 36
wherein said container is provided with indicia on the exterior of said side wall of said container prior to applying the closure to the container.

38. The method set forth in any one of claims 1 to 37
including the further steps of filling the tube through the open end, and
thereafter closing said bottom (12) of said tube by a transverse seal so as to produce a flexible plastic tube for use in dispensing a viscous product.

39. An intermediate flexible plastic container for use in making an open ended article which is to be filled with a viscous product, comprising
an injection molded neck portion (10),
an integral shoulder portion,
an integral flexible tubular body portion (11) of substantially uniform wall thickness and being decorated with indicia, as well as
an integral closed bottom portion (12),
characterized in that
said bottom portion (12) has a wall thickness greater than that of the container body portion (11) and is formed with indentations (13, 14) helpful for rotating said intermediate container when being decorated.

40. The intermediate plastic container set forth in claim 39 wherein also said shoulder portion has a greater thickness than said tubular body portion (11).

41. The intermediate plastic container set forth in claim 39 or 40 wherein said decoration comprises a silk screen print.

42. The intermediate plastic container set forth in any of claims 39-41 wherein said decoration comprises also an in-mold label.

43. The intermediate plastic container set forth in any of claims 39-42 wherein said decoration comprises a heat bonded label.

44. The intermediate plastic container set forth in any of claims 39 to 43 including a closure (C) on said neck portion (10).

45. An apparatus of forming an intermediate flexible plastic article to be filled with a viscous product which comprises:
means for injection molding a neck portion (10) having an opening (10b),
means for extruding a tube integrally with the neck portion (10),
means for blowing said tube into an integral container body (11) having a closed bottom (12),
means for decorating the body portion (11) with indicia,
means for cutting the closed bottom (12) of the container leaving an article having a neck portion, a shoulder portion and an open end tube,
characterized in that
said extruding means is adapted to produce relative movement of the neck portion (10) with respect to and axially away from the extruder while continuing continuously extruding said tube,
said blowing means includes means for closing a blow mold about the extruded tube and means for opening the blow mold to provide an integral container having a neck portion (10), a shoulder portion, a tubular body portion (11) and a closed bottom (12) having a wall thickness greater than that of said tubular body (11) and formed with indentations (13, 14), and
said decorating means comprises
means (50, 51) for engaging the neck and bottom portions (10, 12) as well as means (16, 17) for engaging said indentations (13, 14) and rotating said container about its longitudinal axis.

46. The apparatus of claim 45 comprising
means (50) for holding a closure having threads stationary, and
means (51) for rotating the container about its longitudinal axis to apply the closure on the container.

47. The apparatus set forth in claim 46 including means (90) for cutting the bottom (12) along an axis transverse to the longitudinal axis of the container to provide a tube having a closure applied to its neck (10).

48. The apparatus set forth in claim 45 wherein said means (16, 17) engaging said indentations (13, 14) comprises a rotatable chuck (51) having axially engageable elements axially engaging said indentations (13, 14) and said means for rotating said container comprises said chuck (51).

49. The apparatus set forth in claim 48 including spring means (18) yieldingly urging said chuck (51) into engagement with said bottom (12) of said container.

50. The apparatus set forth in claim 49 wherein said closure holding means comprises a guide rail (32), a holding member (50) having recesses (62), and means for moving said holding member (50) toward the rail (32) to hold the closure in position.

51. The apparatus set forth in claim 50 including means (64) yieldingly supporting said holding member (50).

52. The apparatus set forth in claim 51
wherein said means of supporting said holding member (50) comprises interconnecting means (52 to 57 and 60, 61) between said holding member (50) and drive means (58, 59) operable during movement of said chuck (51) toward the container such that the holding member (50) is moved into engagement with said closure before the chuck (51) is rotated to rotate the container.

53. The apparatus set forth in claim 52
wherein said interconnecting means (52 to 60) comprises means supporting said chuck (51) for movement toward and away from a container and means moving the chuck (51) toward and away from a container.

54. The apparatus set forth in claim 53
wherein said means for moving said chuck (51) and said holding member (50) comprises an oscillating crank (59) and means (52 to 56 and 60 to 61) interconnecting said crank (59) with said holding member (50) and said chuck (51).

55. The apparatus set forth in claim 54
including a cam (56) on said supporting means for said chuck (51), means interconnecting said cam (56) with said crank (59) and a cam follower (52) on said holding member (50) movable with said holding member.

56. The apparatus set forth in claim 55
including means pivotally mounting said cam follower (52) on said holding member (50).

57. The apparatus set forth in any of claims 47 to 56 wherein said means for cutting the bottom (12) of the container comprises means for holding the container and a knife (90) movable transversely of the longitudinal axis of said container.

58. The apparatus set forth in claim 57
including the means (97, 98) of guiding the movement of the knife (90) such that it is in a single plane.

59. The apparatus set forth in claim 58
wherein said means for holding said container comprises opposed gripping members (85, 99) for holding the container adjacent the closed end.

60. The apparatus set forth in claim 59
wherein said means for guiding said knife (90) comprises a guide surface on at least one of said gripping members (85, 99).

61. The apparatus set forth in claim 60
wherein said guide surface comprises a slot in at least one of said gripping members (85, 99).

62. The apparatus set forth in claim 61
including aligned slots in both of said gripping members (85, 99).

63. The apparatus set forth in any of claims 47 to 62 wherein said cutting means for cutting said container comprises a flat knife (90) having a V-shaped cutting edge, means (85, 99) holding said container with the cap thereon in inverted upright position and means (97, 98) guiding said flat knife (90) transversely of the vertical axis of the container.

64. The apparatus set forth in claim 63
wherein said means holding the container in inverted upright position comprises opposed arcuate clamping members (85, 99) having opposed arcuate recesses (86) and means moving one of said members toward the container to clamp the container.

65. The apparatus set fort in claim 64
including a second holding member (87) spaced vertically from said first holding member (99) in a position above the path of movement of the knife (90) to prevent tilting of the container.

66. The apparatus set forth in claim 65
wherein means guiding the knife (90) including a guide slot for guiding said knife.

67. The apparatus set forth in claim 66 including means for moving said knife (90) comprising means for mounting said knife on a slide (91) and means for moving said slide (91) toward and away from the container.

68. The apparatus set forth in claim 67 wherein said means for moving said first slide (91) comprises a cylinder (93) and means for actuating said cylinder (93) to move said slide (91).

69. The apparatus set forth in claim 68 including a second slide, means for positioning said first slide on said second slide (92), a projection (91a) on said first slide (91) extending into a recess (92a) in said second slide (92) to limit the movement of said slide upon actuation of said cylinder (93).

70. The apparatus set forth in claim 69 including means for moving the knife (90) vertically.

71. The apparatus set forth in any one of claims 46 to 70 including means (41) of intermittently moving said closure (C) through a predetermined path and said container past stations (45, 46, 47) including a station (46) where said means (50, 51) for holding and rotating the container to thread the closure (C) on the container is positioned and a station (47) where said means (90) for cutting the bottom (12) of the container is positioned.

72. The apparatus set forth in claim 71 wherein said means (46) for applying the closure (C) and said means (47) for cutting said container are constructed and arranged such that the closure and container are inverted.

## Patentansprüche

1. Verfahren zum Herstellen eines ein Zwischenprodukt bildenden flexiblen Gegenstandes, der mit einem viskosen Produkt gefüllt werden soll, mit folgenden Merkmalen:
ein Hals (10) mit einer Öffnung (10b) wird spritzgegossen;
ein Rohr wird integral an dem Halsabschnitt (10) extrudiert,
das Rohr wird zu einem Zwischenprodukt-Behalter mit einem Rumpf (11) und einem geschlossenen Boden (12) geblasen,
der Rumpf (11) wird mit einem Aufdruck dekoriert,
der geschlossene Boden (12) des Zwischenprodukt-Behälters wird abgeschnitten, so daß ein Gegenstand mit einem Halsabschnitt (10), einem Schulterteil und einem offenen Ende zurückbleibt,
dadurch gekennzeichnet,
daß das Extrudieren durch eine relative Bewegung des Halsabschnitts (10) mit Bezug zum Extruder und axial von diesem weg erfolgt, während das Rohr weiterhin kontinuierlich extrudiert wird,
das Aufblasen umfaßt das Schließen einer Blasform um das extrudierte Rohr und das Formen des Rumpfes (11) mit einer im wesentlichen konstanten Wandungsdicke und mit einem Boden (12), dessen Stärke dicker ist als die Wandungsstärke des Rumpfes (11) und welche zum Eingriff bestimmte Mittel umfaßt, so daß nach dem Öffnen der Formen der Zwischenprodukt-Behälter einen integralen Hals (10), eine Schulter, einen rohrförmigen Rumpf (11) und einen geschlossenen Boden (12) aufweist, und
das Dekorieren den Schritt des Ergreifen der Hals- und Bodenteile (10, 12) umfaßt, wobei der Zwischenprodukt-Behälter um seine Längsachse gedreht wird, während an den Hals- und Bodenabschnitten (10, 12) eine Anlage erfolgt.

2. Verfahren nach Anspruch 1, dadurch gekennzeichnet, daß beim Aufblasen des Rohres Vertiefungen (13, 14) im Boden (12) des Zwischenprodukt-Behälters gebildet werden, wobei die Vertiefungen (13, 14) die zum Eingriff bestimmten Mittel darstellen, um den Behälter zu drehen.

3. Verfahren nach Anspruch 1 oder 2, dadurch gekennzeichnet, daß der Schritt des Dekorierens das Drehen des Zwischenprodukt-Behälters relativ zu einer Siebdruckeinrichtung umfaßt.

4. Verfahren nach Anspruch 1 oder 2, dadurch gekennzeichnet, daß das Dekorieren die Anbringung eines Etiketts an dem Zwischenprodukt-Behälter umfaßt.

5. Verfahren nach Anspruch 1 oder 2, dadurch gekennzeichnet, daß beim Schritt des Dekorierens ein Etikett in die Blasform eingelegt wird.

6. Verfahren nach einem der Ansprüche 1 bis 5, dadurch gekennzeichnet, daß der Schulterabschnitt mit Wandungen ausgebildet ist, die eine Dicke aufweisen, die größer ist als die Dicke des Rumpfteils (11).

7. Verfahren nach einem der Ansprüche 1 bis 6, dadurch gekennzeichnet, daß beim Spritzgießen und Extrudieren lineares Polyethylen mit niedriger Dichte verarbeitet wird.

8. Verfahren nach Anspruch 7, dadurch gekennzeichnet, daß das lineare Polyethylen mit niedriger Dichte einen Dispersionsindex des Molekulargewichtes von größer als 5 aufweist.

9. Verfahren nach einem der Ansprüche 2 bis 8, dadurch gekennzeichnet, daß zum Ergreifen der Vertiefungen (13, 14) ein Klemmfutter (15) mit axialen Eingriffselementen (16, 17) in axialer Richtung in Anlage zu den Vertiefungen (13, 14) bewegt wird und daß zum Drehen des Behälters das Spannfutter (15) gedreht wird.

10. Verfahren nach Anspruch 9, dadurch gekennzeichnet, daß eine Federeinrichtung (18) bereitgestellt wird,
die das Spannfutter (15) in Eingriff mit dem Boden (12) des Behälters nachgiebig drängt.

11. Verfahren nach einem der Ansprüche 1 bis 10, dadurch gekennzeichnet, daß ein Verschluß (C) an den Halsabschnitten (10) des Zwischenprodukt-Behälters angebracht wird, bevor der geschlossene Behälterboden (12) abgeschnitten wird.

12. Verfahren nach Anspruch 11, worin der Halsabschnitt (10) und der Verschluß ( C ) je eine Verschraubung aufweisen und daß der Verschluß (C) festgehalten und der Zwischenprodukt-Behälter gedreht wird, um den Verschluß (C) anzubringen.

13. Verfahren nach Anspruch 12, dadurch gekennzeichnet, daß beim Halten des Verschlusses (C) eine Führungsschiene (32), ein Halteelement (50) mit Aussparungen (62), und der Verschluß (C) in der Nähe der Schiene (32) bereitgestellt werden und daß das Halteelement (50) in Richtung der Schiene (32) bewegt wird, um den Verschluß in seiner Stellung zu halten.

14. Verfahren nach Anspruch 13, dadurch gekennzeichnet, daß das Halteelement (50) elastisch gestützt wird.

15. Verfahren nach Anspruch 14, dadurch gekennzeichnet, daß beim Stützen des Halteelements (50), das Halteelement (50) mit dem Spannfutter (51) bei dessen Bewegung zum Behälter verbunden wird, so daß das Halteelement in Eingriff mit dem Verschluß bewegt wird,
bevor das Spannfutter (51) gedreht wird, um den Behälter zu drehen.

16. Verfahren nach Anspruch 15, dadurch gekennzeichnet, daß beim Verbinden das Spannfutter (51) für eine Bewegung zum Behälter hin und von diesem weg gestützt wird und daß das Spannfutter zum Behälter hin und von diesem weg verschoben wird.

17. Verfahren nach Anspruch 16, dadurch gekennzeichnet, daß bei der Verschiebung des Spannfutters (51) und des Halteelementes (50) eine oszillierende Kurbel (59) mitwirkt, die mit dem Halteelement (50) und dem Spannfutter (51) verbunden ist.

18. Verfahren nach Anspruch 17, dadurch gekennzeichnet, daß eine Nocke (56) an der Abstützung des Spannfutters mitwirkt, wobei die Nocke (56) mit der Kurbel (59) verbunden wird und daß sich ein Nockenfolger (52) an dem Halteelement (50) mit dem Halteelement (50) bewegt.

19. Verfahren nach Anspruch 18, dadurch gekennzeichnet, daß der Nockenfolger (52) an dem Halteelement (50) gelagert ist und schwenkt.

20. Verfahren nach einem der Ansprüche 1 bis 19, dadurch gekennzeichnet, daß beim Abschneiden des Behälterbodens der Behälter gehalten und eine Schneide (24, 90) quer zur Längsachse des Behälters verschoben wird.

21. Verfahren nach Anspruch 20, dadurch gekennzeichnet, daß beim Abschneiden das untere Ende des Zwischenprodukt-Behälters festgeklemmt wird, wobei eine Schneidklinge (24) quer zwischen den festgeklemmten Teilen der flexiblen Rohres geführt wird.

22. Verfahren nach Anspruch 20 oder 21, dadurch gekennzeichnet daß die Schneide (24, 90), so geführt wird, daß sie sich in einer einzigen Ebene bewegt.

23. Verfahren nach Anspruch 22, dadurch gekennzeichnet, daß beim Schneiden des Behälters ein flaches Messer (90) mit einer V-förmigen Schneidkante benutzt wird, daß der Behälter mit dem aufgeschraubten Verschluß (C) in einer umgedrehten aufrechten Stellung gehalten wird und daß die Schneidklinge quer zur vertikalen Achse des Behälters geführt wird.

24. Verfahren nach Anspruch 23, dadurch gekennzeichnet, daß beim Halten des Behälters in umgedrehter aufrechter Stellung sich gegenüberliegende bogenförmige Klemmelemente (85, 99) mit gegenüberliegenden bogenförmigen Aussparungen (86) benutzt werden und daß eines der Klemmelemente zur anderen und zum Behälter hin bewegt wird, um den Behälter festzuklammern.

25. Verfahren nach Anspruch 24, dadurch gekennzeichnet, daß ein zweites Halteelement (87) bereitgestellt wird, das in vertikaler Richtung vom ersten Halteelement (99) in einer Stellung über dem Bewegungsweg der Schneide (90) beabstandet ist, um das Umkippen des Behälters zu vermeiden.

26. Verfahren nach Anspruch 25, dadurch gekennzeichnet, daß beim Führen der Schneide (90) ein Führungsschlitz zum Führen der Schneide benutzt wird.

27. Verfahren nach Anspruch 26, dadurch gekennzeichnet, daß zum Bewegen der Schneide (90) die Schneide an einen Schlitten (91) angebracht wird und der Schlitten (91) zum Behälter und von diesem weg verschoben wird.

28. Verfahren nach Anspruch 27, dadurch gekennzeichnet, daß zum Bewegen des ersten Schlittens (91) ein Zylinder (93) vorgesehen ist und betätigt wird, um den Schlitten zu bewegen.

29. Verfahren nach Anspruch 28, dadurch gekennzeichnet, daß ein zweiter Schlitten (92) zur Aufnahme des ersten Schlittens (91) vorgesehen ist, daß ein Vorsprung (91a) am ersten Schlitten (91) vorgesehen ist, der sich in eine Aussparung (92a) im zweiten Schlitten (92) erstreckt, um die Verschiebung des Schlittens bei der Betätigung des Zylinders (93) zu begrenzen.

30. Verfahren nach Anspruch 29, dadurch gekennzeichnet, daß die Schneide (90) in vertikaler Richtung bewegt wird.

31. Verfahren nach einem der Ansprüche 20 bis 30, dadurch gekennzeichnet, daß zum Halten des Behälters sich gegenüberliegende Klemmelemente (85, 99) benutzt werden, um den Behälter in der Nähe des geschlossenen Endes zu halten.

32. Verfahren nach Anspruch 31, dadurch gekennzeichnet, daß zum Führen der Schneide (90) eine Schneidoberfläche an wenigstens einem der Klemmelemente (85, 99) benutzt wird.

33. Verfahren nach Anspruch 32, dadurch gekennzeichnet, daß zum Bereitstellen einer Führungsoberfläche ein Schlitz in wenigstens einem der Klemmelemente (85, 99) vorgesehen ist.

34. Verfahren nach Anspruch 33, dadurch gekennzeichnet, daß ausgerichtete Schlitze in beiden Klemmelementen (85, 99) vorgesehen sind.

35. Verfahren nach einem der Ansprüche 12 bis 34, dadurch gekennzeichnet, daß der Verschluß (C) über einen vorbestimmten Weg intermittierend bewegt wird, daß der Behälter gehalten und gedreht wird, um den Verschluß auf den Behälter an einer Stelle entlang des Weges aufzuschrauben und daß der Behälterboden an einer anderen Stelle entlang des Weges abgeschnitten wird.

36. Verfahren nach Anspruch 35, dadurch gekennzeichnet, daß der Verschluß (C) aufgebracht und der Behälter abgeschnitten wird, während der Verschluß und der Behälter auf dem Kopf stehen.

37. Verfahren nach Anspruch 36, dadurch gekennzeichnet, daß der Behälter mit einem Aufdruck an der Außenseite der Behälterseitenwand versehen wird, bevor der Verschluß am Behälter angebracht wird.

38. Verfahren nach einem der Ansprüche 1 bis 37, dadurch gekennzeichnet daß das Rohr bzw. die Tube durch das offene Ende gefüllt und danach der Boden (12) der Tube durch eine Querdichtung verschlossen wird, um so eine flexible Kunststofftube für das Spenden eines viskosen Produktes zu erhalten.

39. Flexibler Kunststoffbehälter als Zwischenprodukt beim Herstellen eines mit einem viskosen Produkt zu füllenden Gegenstandes mit einem offenen Ende, mit folgenden Abschnitten:
ein spritzgegossener Hals (10),
eine integrale Schulter,
ein integraler rohrförmiger Körper oder Rumpf (11) mit einer im wesentlichen gleichmäßigen Wanddicke und mit einem Aufdruck dekoriert, sowie
ein integraler geschlossener Boden (12),
dadurch gekennzeichnet,
daß der Boden (12) eine Wanddicke aufweist, die größer ist als die des Behälterrumpfes (11) und Vertiefungen (13, 14) darin ausgebildet sind, die zum Drehen des Zwischenprodukt-Behälters bei dessen Dekorieren behilflich sind.

40. Zwischenprodukt-Behälter nach Anspruch 39,
dadurch gekennzeichnet, daß auch die Schulter eine größere Dicke aufweist als der rohrförmige Rumpf (11).

41. Zwischenprodukt-Behälter nach Anspruch 39
oder 40, dadurch gekennzeichnet, daß die Dekorierung einen Siebdruck umfaßt.

42. Zwischenprodukt-Behälter nach einem der
Ansprüche 39 bis 41, dadurch gekennzeichnet, daß die Dekoration ferner ein Eingußetikett umfaßt.

43. Zwischenprodukt-Behälter nach einem der
Ansprüche 39 bis 42, dadurch gekennzeichnet, daß die Dekorierung ein durch Wärme verbundenes Etikett umfaßt.

44. Zwischenprodukt-Behälter nach einem der
Ansprüche 39 bis 43, dadurch gekennzeichnet, daß ein Verschluß (C) am Halsabschnitt (10) vorgesehen ist.

45. Vorrichtung zum Herstellen eines flexiblen Kunststoffgegenstandes als Zwischenprodukt, der mit einem viskosen Produkt gefüllt werden soll, welche folgende Merkmale umfaßt:
eine Einrichtung zum Spritzgießen eines Halses (10) mit einer Öffnung (10b),
eine Einrichtung zum Extrudieren eines Rohrs einstückig mit dem Hals (10),
eine Einrichtung zum Aufblasen des Rohrs in einen integralen Rumpf (11) mit einem geschlossenen Boden (12),
eine Einrichtung zum Dekorieren des Rumpfes (11) mit einem Aufdruck,
eine Einrichtung zum Abschneiden des geschlossenen Bodens (12) des Behälters, wobei ein Gegenstand mit einem Hals, einer Schulter und einem Rohr mit offenem Ende entsteht,
dadurch gekennzeichnet,
daß die Extrudierungseinrichtung eine relative Bewegung des Halses (10) mit Bezug auf den Extruder und in axialer Richtung von diesem weg erzeugen kann, während das Rohr weiterhin kontinuierlich extrudiert wird,
daß die Blaseinrichtung Einrichtungen zum Schließen einer Blasform über dem extrudierten Rohr und Einrichtungen zum Öffnen der Blasform umfaßt, um einen einteiligen Behälter mit einem Hals (10), einer Schulter, einem rohrförmigen Rumpf (11) und einem geschlossenen Boden (12) zu bilden, dessen Wanddicke größer ist als die des rohrförmigen Rumpfes (11) und mit Vertiefungen (13, 14) ausgebildet ist und
daß die Dekorierungseinrichtung Einrichtungen (50, 51) zur Anlage Eingriff am Hals und Boden (10, 12) und ferner Einrichtungen (16, 17) zum Eingriff an den Vertiefungen (13, 14) und Drehen des Behälters um dessen Längsachse umfaßt.

46. Vorrichtung nach Anspruch 45, gekennzeichnet durch
eine Einrichtung (50) zum stationären Halten eines Verschlusses mit Schraubgewinde und
eine Einrichtung (51) zum Drehen des Behälters um seine Längsachse, um den Verschluß am Behälter anzubringen.

47. Vorrichtung nach Anspruch 46, gekennzeichnet durch eine Einrichtung (90) zum Abschneiden des Bodens (12) entlang einer Achse quer zur Längsachse des Behälters, um eine Tube mit einem Verschluß bereitzustellen, der am Hals (10) angebracht ist.

48. Vorrichtung nach Anspruch 45, dadurch gekennzeichnet, daß die Einrichtung (16, 17), zum Eingriff in die Vertiefungen (13, 14), ein drehbares Klemmfutter (51) mit axialen Eingriffselementen umfaßt, welche in die Vertiefungen (13, 14) eingreifen, und daß die Einrichtung zum Drehen des Behälters das Spannfutter (51) umfaßt.

49. Vorrichtung nach Anspruch 48, dadurch gekennzeichnet, daß sie eine Federeinrichtung (18) umfaßt, die das Spannfutter (51) in Eingriff mit dem Boden (12) des Behälters nachgiebig/flexibel drängt.

50. Vorrichtung nach Anspruch 49, dadurch gekennzeichnet, daß die Verschlußhalteeinrichtung eine Führungsschiene (32), ein Halteelement (50) mit Aussparungen (62), und eine Einrichtung zum Bewegen des Halteelementes (50) zur Schiene (32) umfaßt, um den Verschluß an seinem Platz zu halten.

51. Vorrichtung nach Anspruch 50, dadurch gekennzeichnet, daß sie eine Einrichtung (64) umfaßt, welche das Halteelement (50) elastisch stützt.

52. Vorrichtung nach Anspruch 51, dadurch gekennzeichnet, daß die Einrichtung zum Stützen des Halteelementes (50) Verbindungseinrichtungen (52 bis 57 und 60, 61) zwischen dem Halteelement (50) und einem Antrieb (58, 59) umfaßt, der während der Bewegung des Spannfutters (51) zum Behälter wirksam ist, so daß das Halteelement (50) in Eingriff mit dem Verschluß bewegt wird, bevor das Spannfutter (51) gedreht wird, um den Behälter zu drehen.

53. Vorrichtung nach Anspruch 52, dadurch gekennzeichnet, daß die Verbindungseinrichtung (52 bis 60) eine Einrichtung zum Tragen des Spannfutters (51) für eine Bewegung zum Behälter hin und von diesem weg und eine Einrichtung, die das Spannfutter (51) zum Behälter hin und von diesem weg bewegt, umfaßt.

54. Vorrichtung nach Anspruch 53, dadurch gekennzeichnet, daß die Einrichtung zum Bewegen des Spannfutters (51) und des Halteelementes (50) eine oszillierende Kurbel (59) und Einrichtungen (52 bis 56 und 60 bis 61) umfassen, die die Kurbel (59) mit dem Halteelement (50) und dem Spannfutter (51) verbinden.

55. Vorrichtung nach Anspruch 54, dadurch gekennzeichnet, daß sie eine Nocke (56) an der Stützeinrichtung für das Spannfutter (51), eine Einrichtung, welche die Nocke (56) mit der Kurbel (59) verbindet, und einen Nockenfolger (52) am Halteelement (50), der mit dem Halteelement verschiebbar ist, umfaßt.

56. Vorrichtung nach Anspruch 55, welche eine Einrichtung zum schwenkbaren Anbringen des Nockenfolgers (52) an dem Halteelement (50) umfaßt.

57. Vorrichtung nach einem der Ansprüche 47 bis 56, dadurch gekennzeichnet, daß die Einrichtung zum Abschneiden des Behälterbodens (12) eine Einrichtung zum Halten des Behälters und eine Schneide (90), die quer zur Längsachse des Behälters beweglich ist, umfaßt.

58. Vorrichtung nach Anspruch 57, dadurch gekennzeichnet, daß sie eine Einrichtung (97, 98) zum Führen der Schneide (90) umfaßt, so daß die Bewegung in einer einzigen Ebene liegt.

59. Vorrichtung nach Anspruch 58, dadurch gekennzeichnet, daß die Einrichtung zum Halten des Behälters sich gegenüberliegende Klemmelemente (85, 99) umfaßt die den Behälter in der Nähe des geschlossenen Endes halten.

60. Vorrichtung nach Anspruch 59, dadurch gekennzeichnet, daß die Einrichtung zum Führen der Schneide (90) eine Führungsoberfläche an wenigstens einem der Klemmelemente (85, 99) umfaßt.

61. Vorrichtung nach Anspruch 60, dadurch gekennzeichnet, daß die Führungsoberfläche einen Schlitz in wenigstens einem der Klemmelemente (85, 99) umfaßt.

62. Vorrichtung nach Anspruch 61, dadurch gekennzeichnet, daß sie ausgerichtete Schlitze in beiden Klemmelementen (85, 99) umfaßt.

63. Vorrichtung nach einem der Ansprüche 47 bis 62, dadurch gekennzeichnet, daß die Schneideinrichtung zum Abschneiden des Behälters ein flaches Messer (90) mit einer V-förmigen Schneidkante, eine Einrichtung (85, 99), welche den Behälter mit dem darauf angebrachten Verschluß in einer umgedrehten aufrechten Position hält, und eine Einrichtung (97, 98), welche das flache Messer (90) quer zur vertikalen Achse des Behälters führt, umfaßt.

64. Vorrichtung nach Anspruch 63, dadurch gekennzeichnet, daß die Einrichtung, welche den Behälter in einer invertierten aufrechten Stellung hält, sich gegenüberliegende bogenförmige Klemmelemente (85, 99) mit sich gegenüberliegenden bogenförmigen Aussparungen (86) und eine Einrichtung zum Bewegen eines der Elemente zum Behälter umfaßt, um den Behälter festzuklemmen.

65. Vorrichtung nach Anspruch 64, dadurch gekennzeichnet, daß sie ein zweites Halteelement (87) umfaßt, welches in vertikaler Richtung vom ersten Halteelement (99) an einer Stelle über dem Bewegungsweg der Schneide (90) beabstandet ist, um ein Umkippen des Behälters zu verhindern.

66. Vorrichtung nach Anspruch 65, dadurch gekennzeichnet, daß die Einrichtung zum Führen des Messers (90) einen Führungsschlitz zum Führen der Schneide umfaßt.

67. Vorrichtung nach Anspruch 66, gekennzeichnet durch eine Einrichtung zum Bewegen des Messers (90), die eine Befestigungseinrichtung für das Messer an einen Schlitten (91) und eine Einrichtung zum Bewegen des Schlittens (91) zum Behälter und von diesem weg umfaßt.

68. Vorrichtung nach Anspruch 67, dadurch gekennzeichnet, daß die Einrichtung zum Bewegen des ersten Schlittens (91) einen Zylinder (93) und eine Betätigungseinrichtung des Zylinders (93) umfaßt, um den Schlitten (91) zu bewegen.

69. Vorrichtung nach Anspruch 68, dadurch gekennzeichnet, daß sie einen zweiten Schlitten, eine Einrichtung zum Positionieren des ersten Schlittens am zweiten Schlitten (92), einen Vorsprung (91a) am ersten Schlitten (91), der sich in einer Aussparung (92a) im zweiten Schlitten (92) erstreckt, um die Bewegung des Schlittens bei der Betätigung des Zylinders (93) zu begrenzen, umfaßt.

70. Vorrichtung nach Anspruch 69, dadurch gekennzeichnet, daß sie eine Einrichtung zum Bewegen des Messers (90) in vertikaler Richtung umfaßt.

71. Vorrichtung nach einem der Ansprüche 46 bis 70, dadurch gekennzeichnet, daß sie eine Einrichtung (41) zur intermittierenden Bewegung des Verschlusses (C) über einen vorbestimmten Weg umfaßt, und daß der Behälter Stationen (45, 46, 47) durchläuft, die eine Station (46) umfassen, an der die Einrichtungen (50, 51) zum Halten und Drehen des Behälters zum Verschrauben des Verschlusses (C) an dem Behälter angeordnet sind und eine Station (47) umfassen, an der die Einrichtung (90) zum Abschneiden des Bodens (12) des Behälters angeordnet ist.

72. Vorrichtung nach Anspruch 71, dadurch gekennzeichnet, daß die Einrichtung (46) zum Anbringen des Verschlusses (C) und die Einrichtung (47) zum Abschneiden des Behälters so konstruiert und angeordnet sind, daß der Verschluß und der Behälter auf dem Kopf stehen.

## Revendications

1. Procédé de formation d'un article souple intermédiaire en matière plastique, destiné à être rempli avec un produit visqueux, ce procédé comprenant:
le moulage par injection d'une partie goulot (10) comportant un orifice (10b),
l'extrusion d'un tube d'une seule pièce avec la partie goulot (10),
le soufflage dudit tube pour le transformer en un récipient intermédiaire comportant une partie corps (11) et un fond fermé (12),
la décoration de la partie corps (11) avec des motifs,
la coupe du fond fermé (12) du récipient intermédiaire de manière à laisser subsister un article comportant une partie goulot (10), une partie épaule et une extrémité ouverte,
caractérisé en ce que:
l'extrusion est effectuée par un déplacement entre la partie goulot (10) et l'extrudeuse dans une direction axiale d'éloignement par rapport à cette dernière tandis que ledit tube continue à être extrudé d'une façon continue.
le soufflage comprend la fermeture d'un moule autour du tube extrudé et le formage de ladite partie corps (11) avec une épaisseur de paroi sensiblement constante et avec un fond (12) qui est plus épais que ne l'est ladite partie corps (11) et qui comporte des moyens destinés à être mis en prise d'entraînement, grâce à quoi, après l'ouverture du moule, on obtient ledit récipient intermédiaire comportant, d'une seule pièce, une partie goulot (10), une partie épaule, une partie corps tubulaire (11) et un fond fermé (12), et
ladite étape de décoration comprend l'établissement d'une prise d'entraînement entre les parties goulot et fond (10, 12) et l'entraînement en rotation dudit récipient intermédiaire autour de son axe longitudinal pendant la prise d'entraînement des parties goulot et fond (10, 12).

2. Procédé selon la revendication 1, dans lequel ladite étape de soufflage dudit tube forme des empreintes (13, 14) dans le fond (12) dudit récipient intermédiaire, lesdites empreintes (13, 14) constituant lesdits moyens destinés à être mis en prise pour faire tourner ledit récipient.

3. Procédé selon la revendication 1 ou 2, dans lequel ladite étape de décoration comprend la rotation dudit récipient intermédiaire par rapport à un dispositif d'impression à écran de soie.

4. Procédé selon la revendication 1 ou 2, dans lequel ladite étape de décoration comprend l'application d'une étiquette au récipient intermédiaire.

5. Procédé selon la revendication 1 ou 2, dans lequel ladite étape de décoration comprend un étiquetage sous moule.

6. Procédé selon l'une quelconque des revendications 1 à 5, dans lequel ladite partie épaule est formée avec des parois ayant une épaisseur plus grande que celle de ladite partie corps (11).

7. Procédé selon l'une quelconque des revendications 1 à 6, dans lequel ladite étape de moulage par injection et de moulage par extrusion comprend l'injection et l'extrusion de polyéthylène basse densité à chaînes linéaires.

8. Procédé selon la revendication 7, dans lequel ledit polyéthylène basse densité à chaînes linéaires présente un indice de dispersion de poids moléculaire supérieur à 5.

9. Procédé selon l'une quelconque des revendications 2 à 8, dans lequel ladite étape de mise en prise desdites empreintes (13, 14) comprend le déplacement d'un mandrin (15) comportant des éléments (16, 17) de mise en prise axiale qui viennent en prise axialement avec lesdites empreintes (13, 14) et ladite étape d'entraînement en rotation dudit récipient comprend l'entraînement en rotation dudit mandrin (15).

10. Procédé selon la revendication 9, comprenant l'utilisation de moyens élastiques (18) poussant de façon élastique ledit mandrin (15) de manière qu'il vienne en prise avec ledit fond (12) dudit récipient.

11. Procédé selon l'une quelconque des revendications 1 à 10, comprenant l'application d'un élément de fermeture (C) à la partie goulot (10) dudit récipient intermédiaire avant la coupe du fond fermé (12) du récipient.

12. Procédé selon la revendication 11, dans lequel ladite partie goulot (10) comporte un filetage et ledit élément de fermeture (C) comporte un filetage, ledit procédé comprenant le maintien dudit élément de fermeture (C) et l'entraînement en rotation dudit récipient intermédiaire pour que soit appliqué ledit élément de fermeture (C).

13. Procédé selon la revendication 12, dans lequel ladite étape de maintien de l'élément de fermeture (C) comprend l'utilisation d'un rail de guidage (32), l'utilisation d'un élément de maintien (50) comportant des évidements (62), l'utilisation d'un élément de fermeture (C) adjacent audit rail (32), et le déplacement dudit élément de maintien (50) vers le rail (32) pour maintenir l'élément de fermeture en position.

14. Procédé selon la revendication 13, comprenant l'étape de support de façon élastique dudit élément de maintien.

15. Procédé selon la revendication 14, dans lequel l'étape de support dudit élément de maintien (50) comprend la synchronisation dudit élément de maintien (50) avec le déplacement dudit mandrin (51) vers le récipient de telle sorte que l'élément de maintien (50) soit amené en prise avec ledit élément de fermeture avant que le mandrin (51) ne soit entraîné en rotation pour faire tourner le récipient.

16. Procédé selon la revendication 15, dans lequel ladite étape de synchronisation comprend le support du mandrin (51) en vue de son déplacement en direction d'un récipient et dans une direction opposée et le déplacement du mandrin en direction d'un récipient et dans une direction opposée.

17. Procédé selon la revendication 16, dans lequel ladite étape de déplacement dudit mandrin (51) et dudit élément de maintien (50) comprend l'utilisation d'une manivelle oscillante (59) reliée entre ledit élément de maintien (50) et ledit mandrin (51).

18. Procédé selon la revendication 17, comprenant l'utilisation d'une came (56) sur ledit support dudit mandrin, l'établissement d'une liaison entre ladite came (56) et ladite manivelle (59) et l'utilisation, sur ledit élément de maintien (50), d'un élément suiveur de came (52) pouvant se déplacer avec ledit élément de maintien (50).

19. Procédé selon la revendication 18, comprenant l'étape de montage de façon pivotante dudit élément suiveur de came (52) sur ledit élément de maintien (50).

20. Procédé selon l'une quelconque des revendications 1 à 19, dans lequel ladite étape de coupe du fond du récipient comprend le maintien du récipient et le déplacement d'un couteau (24, 90) transversalement à l'axe longitudinal dudit récipient .

21. Procédé selon la revendication 20, dans lequel ladite étape de coupe consiste à bloquer par serrage l'extrémité inférieure du récipient intermédiaire et à diriger la lame de coupe du couteau (24) transversalement entre les parties bloquées par serrage de la partie tube souple.

22. Procédé selon la revendication 20 ou 21, comprenant l'étape de guidage du déplacement du couteau (24, 90) de telle sorte qu'il ait lieu dans un seul plan.

23. Procédé selon la revendication 22, dans lequel ladite étape de coupe dudit récipient comprend l'utilisation d'un couteau plat (90) comportant une arête de coupe en forme de V, à maintenir dans une position verticale inversée ledit récipient avec l'élément de fermeture (C) sur ce dernier et le guidage de ladite lame de couteau transversalement à l'axe verticale du récipient.

24. Procédé selon la revendication 23, dans lequel ladite étape de maintien du récipient dans une position verticale inversée comprend l'utilisation d'éléments de serrage arqués et opposés (85, 99) comportant des évidements arqués et opposés (86) et le déplacement de l'un desdits éléments de serrage en direction de l'autre élément de serrage, vers le récipient, pour bloquer par serrage le récipient.

25. Procédé selon la revendication 24, comprenant l'étape d'utilisation d'un second élément de maintien (87) espacé verticalement dudit premier élément de maintien (99) en un endroit situé au-dessus de la trajectoire du couteau (90) afin d'empêcher le basculement du récipient.

26. Procédé selon la revendication 25, dans lequel l'étape de guidage du couteau (90) comprend l'utilisation d'une fente de guidage pour guider ledit couteau.

27. Procédé selon la revendication 26, dans lequel ladite étape de déplacement dudit couteau (90) comprend le montage dudit couteau sur un coulisseau (91) et le déplacement dudit coulisseau (91) en direction dudit récipient et dans une direction opposée.

28. Procédé selon la revendication 27, dans lequel ladite étape de déplacement dudit premier coulisseau (91) comprend l'utilisation d'un vérin (93) et l'actionnement dudit vérin pour déplacer ledit coulisseau.

29. Procédé selon la revendication 28, comprenant l'utilisation d'un second coulisseau (92), le positionnement dudit premier coulisseau (91) sur ledit second coulisseau (92), l'utilisation d'une saillie (91a) sur ledit premier coulisseau (91), laquelle saillie pénètre dans un évidement (92a) dudit second coulisseau (92) pour limiter le déplacement dudit coulisseau lors de l'actionnement dudit vérin (93).

30. Procédé selon la revendication 29, comprenant l'étape de déplacement du couteau (90) verticalement.

31. Procédé selon l'une quelconque des revendications 20 à 30, dans lequel ladite étape de maintien dudit récipient comprend l'utilisation d'éléments de serrage opposés (85, 99) destinés à maintenir le récipient en le serrant en un endroit adjacent à l'extrémité fermée.

32. Procédé selon la revendication 31, dans lequel ladite étape de guidage dudit couteau (90) comprend l'utilisation d'une surface de guidage sur au moins un desdits éléments de serrage (85, 99).

33. Procédé selon la revendication 32, dans lequel ladite étape d'utilisation d'une surface de guidage comprend l'utilisation d'une fente dans au moins un desdits éléments de serrage (85, 99).

34. Procédé selon la revendication 33, comprenant l'utilisation de fentes alignées dans les deux éléments de serrage précités (85, 99).

35. Procédé selon l'une quelconque des revendications 12 à 34, comprenant l'étape de déplacement de façon intermittente dudit élément de fermeture (C) suivant un trajet prédéterminé et l'exécution de l'étape de maintien et d'entraînement en rotation du récipient pour visser l'élément de fermeture sur le récipient à un endroit donné le long dudit trajet et l'exécution de l'étape de coupe du fond du récipient en un autre endroit le long dudit trajet.

36. Procédé selon la revendication 35, dans lequel lesdites étapes d'application de l'élément de fermeture (C) et de coupe dudit récipient sont exécutées pendant que l'élément de fermeture et le récipient sont en position inversée.

37. Procédé selon la revendication 36, dans lequel ledit récipient est pourvu de motifs sur l'extérieur de sa paroi latérale avant l'application de l'élément de fermeture à ce récipient.

38. Procédé selon l'une quelconque des revendications 1 à 37, comprenant les étapes supplémentaires de remplissage du tube à travers l'extrémité ouverte et la fermeture dudit fond (12) dudit tube par un joint étanche transversal de manière à obtenir un tube souple en matière plastique, destiné à être utilisé pour distribuer un produit visqueux.

39. Récipient souple intermédiaire en matière plastique destiné à être utilisé pour fabriquer un article à extrémité ouverte qui doit être rempli avec un produit visqueux, comprenant:
une partie goulot (10) moulée par injection,
une partie épaule intégrée,
une partie corps tubulaire souple intégrée (11) qui a une épaisseur de paroi sensiblement uniforme et qui est décorée avec des motifs,
ainsi qu'une partie fond fermée intégrée (12),
caractérisé en ce que:
ladite partie fond (12) a une épaisseur de paroi supérieure à celle de la partie corps (11) du récipient et comporte des empreintes (13, 14) utiles pour faire tourner ledit récipient intermédiaire quand on le décore.

40. Récipient intermédiaire en matière plastique selon la revendication 39, dans lequel aussi ladite partie épaule a une épaisseur supérieure à celle de ladite partie corps tubulaire (11).

41. Récipient intermédiaire en matière plastique selon la revendications 39 ou 40, dans lequel ladite opération de décoration comprend une impression à l'écran de soie.

42. Récipient intermédiaire en matière plastique selon l'une quelconque des revendications 39 à 41, dans lequel ladite décoration comprend aussi une étiquette appliquée sous moule.

43. Récipient intermédiaire en matière plastique selon l'une quelconque des revendications 39 à 42, dans lequel ladite décoration comprend une étiquette collée à chaud.

44. Récipient intermédiaire en matière plastique selon l'une quelconque des revendications 39 à 43, comprenant un élément de fermeture (C) sur ladite partie goulot (10).

45. Appareil de formation d'un article souple intermédiaire en matière plastique destiné à être rempli avec un produit visqueux, cet appareil comprenant:
des moyens destinés à mouler par injection une partie goulot (10) comportant un orifice (10b),
des moyens destinés à extruder un tube d'une seule pièce avec la partie goulot (10),
des moyens destinés à transformer par soufflage ledit tube en un corps monobloc (11) de récipient comportant un fond fermé (12),
des moyens destinés à décorer la partie corps (11) avec des motifs,
des moyens destinés à couper le fond fermé (12) du récipient de manière à laisser subsister un article comportant une partie goulot, une partie épaule et un tube à extrémité ouverte,
caractérisé en ce que:
lesdits moyens d'extrusion sont adaptés pour produire un déplacement entre la partie goulot (10) et l'extrudeuse dans une direction axiale d'éloignement par rapport à cette dernière tandis que ledit tube continue à être extrudé d'une façon continue,
lesdits moyens de soufflage comprennent des moyens destinés à fermer un moule autour du tube extrudé et des moyens destinés à ouvrir le moule de soufflage afin d'obtenir un récipient comportant d'une seule pièce une partie goulot (10), une partie épaule, une partie corps tubulaire (11) et un fond fermé (12) ayant une épaisseur de paroi plus grande à celle dudit corps tubulaire (11) et dans lequel sont formées des empreintes (13, 14), et
lesdits moyens de décoration comprennent
des moyens (50, 51) destinés à venir en prise avec les parties goulot et fond (10, 12) ainsi que des moyens (16, 17) destinés à être mis en prise avec lesdites empreintes (13, 14) et à faire tourner ledit récipient autour de son axe longitudinal.

46. Appareil selon la revendication 45 comprenant:
des moyens (50) destinés à maintenir immobile un élément de fermeture comportant un filetage, et
des moyens (51) destinés à faire tourner le récipient autour de son axe longitudinal pour appliquer l'élément de fermeture au récipient.

47. Appareil selon la revendication 46, comprenant des moyens (90) destinés à couper le fond (12) le long d'un axe transversal à l'axe longitudinal du récipient pour obtenir un tube sur le goulot duquel a été appliqué un élément de fermeture (10).

48. Appareil selon la revendication 45, dans lequel lesdits moyens (16, 17) venant en prise avec lesdites empreintes (13, 14) comprennent un mandrin rotatif (51) comportant des éléments de mise en prise axiale qui viennent axialement en prise avec lesdites empreintes (13, 14), et lesdits moyens destinés à faire tourner le récipient comprend ledit mandrin (51).

49. Appareil selon la revendication 48, comprenant des moyens élastiques (18) poussant de façon élastique ledit mandrin (51) pour le faire venir en prise avec ledit fond (12) dudit récipient.

50. Appareil selon la revendication 49, dans lequel lesdits moyens de maintien d'élément de fermeture comprennent un rail de guidage (32), un élément de maintien (50) comportant des évidements (62), et des moyens destinés à déplacer ledit élément de maintien (50) vers le rail (32) pour maintenir en position l'élément de fermeture.

51. Appareil selon la revendication 50, comprenant des moyens (64) supportant de façon élastique ledit élément de maintien (50).

52. Appareil selon la revendication 51, dans lequel lesdits moyens supportant ledit élément de maintien (50) comprennent des moyens de liaison mutuelle (52 à 57 et 60,61) entre ledit élément de maintien (50) et des moyens moteur (58,59) qui peuvent être actionnés pendant de déplacement dudit mandrin (51) en direction du récipient de telle sorte que l'élément de maintien (50) soit mis en prise avec ledit élément de fermeture avant que ce mandrin (51) ne soit entraîné en rotation pour faire tourner le récipient.

53. Appareil selon la revendication 52, dans lequel lesdits moyens de liaison mutuelle (52 à 60) comprennent des moyens supportant ledit mandrin (51) en vue d'un déplacement en direction d'un récipient et dans une direction opposée et des moyens déplaçant le mandrin (51) en direction d'un récipient et dans une direction opposée.

54. Appareil selon la revendication 53, dans lequel lesdits moyens destinés à déplacer ledit mandrin (51) et ledit élément de maintien (50) comprennent une manivelle oscillante (59) et des moyens (52 à 56 et 60 à 61) reliant mutuellement ladite manivelle (59) audit élément de maintien (50) et audit mandrin (51).

55. Appareil selon la revendication 54, comprenant une came (56) sur lesdits moyens de support pour ledit mandrin (51), des moyens reliant mutuellement ladite came (56) à ladite manivelle (59) et à un élément suiveur de came (52) disposé sur ledit élément de maintien (50) et pouvant se déplacer avec ledit élément de maintien.

56. Appareil selon la revendication 55, comprenant des moyens montant de façon pivotante ledit élément suiveur de came (52) sur ledit élément de maintien (50).

57. Appareil selon l'une quelconque des revendications 47 à 56, dans lequel lesdits moyens destinés à couper le fond (12) du récipient comprennent des moyens pour maintenir le récipient ainsi qu'un couteau (90) pouvant se déplacer transversalement à l'axe longitudinal dudit récipient.

58. Appareil selon la revendication 57, comprenant des moyens (97, 98) destiné à guider le déplacement du couteau (90) de manière qu'il ait lieu dans un seul plan.

59. Appareil selon la revendication 58, dans lequel lesdits moyens destinés à maintenir ledit récipient comprend des éléments de serrage opposés (85, 99) destinés à maintenir le récipient par serrage en un endroit adjacent à son extrémité fermée.

60. Appareil selon la revendication 59, dans lequel lesdits moyens destinés à guider ledit couteau (90) comprennent une surface de guidage sur au moins un desdits éléments de serrage (85, 99).

61. Appareil selon la revendication 60, dans lequel ladite surface de guidage comprend une fente dans au moins un desdits éléments de serrage (85, 99).

62. Appareil selon la revendication 61, comprenant des fentes alignées dans les deux éléments de serrage (85, 99).

63. Appareil selon l'une quelconque des revendications 47 à 62, dans lequel lesdits moyens de coupe destinés à couper ledit récipient comprennent un couteau plat (90) comportant une arête de coupe en forme de V, des moyens (85, 99) maintenant ledit récipient avec l'élément de fermeture sur ce dernier dans une position verticale inversée, et des moyens (97, 98) guidant ledit couteau plat (90) transversalement à l'axe vertical du récipient.

64. Appareil selon la revendication 63, dans lequel lesdits moyens maintenant le récipient dans une position verticale inversée comprennent des éléments arqués opposés (85, 99) de blocage par serrage comportant des évidements arqués opposés (86) et des moyens déplaçant un desdits éléments en direction du récipient pour bloquer par serrage ce récipient.

65. Appareil selon la revendication 64, comprenant un second élément de maintien (87) espacé verticalement dudit premier élément de maintien (99) dans un endroit situé au-dessus du trajet de déplacement du couteau (90) pour empêcher le basculement du récipient.

66. Appareil selon la revendication 65, dans lequel les moyens guidant le couteau (90) comprennent une fente de guidage destinée à guider ledit couteau.

67. Appareil selon la revendication 66, comprenant des moyens destinés à déplacer ledit couteau (90) et comprenant des moyens destinés à monter ledit couteau sur un coulisseau (91) et des moyens pour déplacer ledit coulisseau (91) en direction du récipient et dans une direction opposée.

68. Appareil selon la revendication 67, dans lequel lesdits moyens destinés à déplacer ledit premier coulisseau (91) comprennent un vérin (93) et des moyens destiné à actionner ledit vérin (93) pour déplacer ledit coulisseau (91).

69. Appareil selon la revendication 68, comprenant un second coulisseau, des moyens destinés à positionner ledit premier coulisseau sur ledit second coulisseau (92), une saillie (91a) située sur ledit premier coulisseau (91) et pénétrant dans un évidement (92a) dudit second coulisseau (92) pour limiter le déplacement dudit coulisseau lors de l'actionnement dudit vérin (93).

70. Appareil selon la revendication 69, comprenant des moyens destinés à déplacer le couteau (90) verticalement.

71. Appareil selon l'une quelconque des revendications 46 à 70, comprenant des moyens (41) destiné à déplacer de façon intermittente ledit élément de fermeture (C) sur un trajet prédéterminé et ledit récipient devant des postes (45, 46, 47) comprenant un poste (46) où se trouvent lesdits moyens (50, 51) destinés à maintenir et faire tourner le récipient pour visser l'élément de fermeture (C) sur le récipient et un poste (47) où se trouvent lesdits moyens (90) destinés à couper le fond (12) du récipient.

72. Appareil selon la revendication 71, dans lequel lesdits moyens (46) destinés à appliquer l'élément de fermeture (C) et lesdits moyens (42) destinés à couper ledit récipient sont construits et disposés de telle sorte que l'élément de fermeture et le récipient sont en position inversée.
